# EUROPÄISCHE PATENTANMELDUNG

(11) **EP 2 233 273 A2**
(43) Veröffentlichungstag der Anmeldung: **29.09.2010**
(21) Anmeldenummer: 10152360.3
(22) Anmeldetag: 02.02.2010
(51) Int. Cl.: B29C 49/42, B65G 47/84

(54) **Verschleißreduktion von Steuerkurven**

(30) Priorität: 05.02.2009 DE 102009007717
(71) Anmelder: Krones AG, 93073 Neutraubling (DE)
(72) Erfinder: Winzinger, Frank, 93051, Regensburg (DE); Höllriegl, Thomas, 93158, Teublitz (DE); Steinberger, Harald, 93107, Thalmassing (DE)
(74) Vertreter: Bittner, Bernhard

(57) **Zusammenfassung**

Vorrichtung (1) zum Behandeln von Behältnissen und insbesondere von Flüssigkeitsbehältnissen mit wenigstens einer Behandlungseinheit (2), welche die Behältnisse in einer vorbestimmten Weise behandelt, wobei die Behandlungseinheit (2) entlang eines vorgegebenen Bewegungspfads (P) bewegbar ist, und wobei die Vorrichtung (1) eine Führungskurve (4) aufweist, die derart gestaltet ist, dass sie wenigstens einmal entlang des Bewegungspfads eine Bewegung der Behandlungseinheit in einer senkrecht zu dem Bewegungspfad (P) stehenden Richtung bewirkt, wobei die Behandlungseinheit (2) ein mit der Führungskurve (4) wenigstens zeitweise in Kontakt stehendes Führungselement (6) aufweist und wobei eine zwischen dem Führungselement (6) und der Führungskurve wirkende Kraft wenigstens zeitweise entlang eines vorgegebenen Bereichs (B) des Bewegungspfads (P) variiert. Erfindungsgemäß weist die Vorrichtung (1) eine Kraftreduzierungseinrichtung (20) auf, welche bewirkt, dass die in einem bestimmten Punkt des Bereichs (B) zwischen der Führungskurve (4) und dem Führungselement (6) wirkende Kraft zumindest im Mittel reduziert ist.

## Beschreibung

Die vorliegende Erfindung bezieht sich auf eine Vorrichtung und ein Verfahren zum Behandeln von Behältnissen. In der Getränke herstellenden Industrie sind diverse Vorrichtungen und Verfahren zum Behandeln von Behältnissen bekannt. Beispiele für derartige Vorrichtungen sind Unformungseinheiten bzw. Blaseinheiten, welche Kunststoffvorformlinge in Kunststoffbehältnisse umformen. Weitere Beispiele sind Heizeinrichtungen, welche die Behältnisse erwärmen oder auch einen Formträger für derartige Vorformlinge verschließen. Daneben sind auch Reinigungseinrichtungen für derartige Behältnisse bekannt.

Bei vielen dieser Maschinen ist es notwendig, dass die zu behandelnden Behältnisse nicht nur entlang eines vorgegebenen Transportpfades transportiert werden, sondern dass eine Behandlungseinheit der Maschine oder die Behältnisse selbst in einer senkrecht zu dieser Bewegungsbahn verlaufenden Richtung bewegt werden, um einen bestimmten Behandlungsvorgang durchzuführen. Üblicherweise wird zu diesem Zweck eine spezielle Behandlungseinheit wie beispielsweise eine Blasdüse oder eine Reckstange bewegt, es wäre jedoch auch möglich, dass ein Transportmittel, welches das Behältnis hält, entsprechend bewegt wird. Um derartige Bewegungen durchzuführen werden im Stand der Technik oftmals Führungskurven eingesetzt, die beispielsweise mit Führungsrollen der betreffenden Behandlungseinheit zusammenarbeiten um diese Bewegung senkrecht zu dem Transportpfad zu bewirken.

Diese Führungskurven arbeiten zuverlässig und auch über längere Zeiträume zufrieden stellend. So beschreibt beispielsweise die DE 2354391 eine Mehrstation-Drehtisch-Blasformmaschine. In dieser Offenbarung wird darauf hingewiesen, dass ein gewisses Spiel in Form einer Toleranz zwischen dem Außendurchmesser des Mitnehmers und einer Kurvenbahn vorgesehen sein muss. Es wird jedoch auch darauf hingewiesen, dass dieses Spiel nicht übermäßig groß ausgestaltet werden sollte, da ansonsten die Gefahr eines Verschleißes der entsprechenden Führungsbahn besteht. Die US 5,531,588 beschreibt eine einstellbare Nockenführung für eine Blasformmaschine.

Aus der DE 10 2007 011 060 A1 ist ein Verfahren zur Blasformung von Behältern bekannt. Dabei ist ein Tragelement mit einem beweglichen Kurvensegment derart koppelbar, dass das Tragelement steuerbar entweder in einer Arbeitsposition oder in einer Ruhepositionierung angeordnet ist. Auch in dieser Druckschrift wird jedoch kein Hinweis darauf gegeben, den Verschleiß derartiger Kurvensegmente zu reduzieren. Auch ergibt sich aus der Koppelbarkeit keine entsprechende Verschleißverringerung.

Weiterhin ist man in jüngerer Zeit teilweise dazu über gegangen, mechanische Führungskurven durch separate servomotorische Ansteuerungen der Behandlungseinheiten zu ersetzen. Gleichwohl hat sich der Einsatz von Führungskurven in vielen Bereichen als sehr zuverlässig bewährt.

Der vorliegenden Erfindung liegt daher die Aufgabe zugrunde, eine Vorrichtung und ein Verfahren zur Verfügung zu stellen, welche eine Verschleißreduzierung von mechanischen Führungskurven beim Einsatz in Vorrichtungen zum Behandeln von Behältnissen zur Verfügung zu stellen. Dies wird erfindungsgemäß durch eine Vorrichtung nach Anspruch 1 sowie ein Verfahren nach Anspruch 12 erreicht. Vorteilhafte Ausführungsformen und Weiterbildungen sind Gegenstand der Unteransprüche.

Eine erfindungsgemäße Vorrichtung zum Behandeln von Behältnissen und insbesondere von Flüssigkeitsbehältnissen weist wenigstens eine Behandlungseinheit auf, welche die Behältnisse in einer vorbestimmten Weise behandelt. Dabei ist die Behandlungseinheit entlang eines vorgegebenen Bewegungspfads bewegbar und die Vorrichtung weist eine Führungskurve, genauer eine mechanische Führungskurve, auf, die derart gestaltet ist, dass sie wenigstens einmal entlang des Bewegungspfades eine Bewegung der Behandlungseinheit in einer senkrecht zu dem Bewegungspfad stehenden Richtung bewirkt oder aufnimmt. Vorzugsweise ist hier unter Bewirken ein Leiten beziehungsweise ein Führen der Führungselemente der Behandlungseinheit, d.h. ein insbesondere durch die Führungskurve verursachtes Bewirken dieser Bewegung zu verstehen. Demgegenüber werden im Falle des Aufnehmens von der Behandlungseinheit bzw. deren Führungselement verursachte Bewegungen aufgenommen bzw. aufgefangen. Sowohl im Falle des Bewirkens als auch im Falle des Aufnehmens werden jedoch Krafteinwirkungen auf die Führungskurve verursacht.

Weiterhin weist die Behandlungseinheit ein mit der Führungskurve wenigstens zeitweise in Kontakt stehendes Führungselement auf, wobei eine zwischen dem Führungselement und der Führungskurve wirkende Kraft wenigstens zeitweise entlang eines vorgegebenen Bereichs des Bewegungspfads variiert.

Bei diesen Kraftvariationen kann es sich auch um solche Variationen handeln, die nur sehr kurzzeitig bzw. stoßartig auftreten.

Insbesondere ist unter dieser Variation der Kraft auch der Unterschied zwischen dem Stoß direkt beim Aufprall des Führungselements auf der Führungskurve und der Kraft bei der weiteren Bewegung des Führungselements auf der Führungskurve zu sehen.

Erfindungsgemäß weist die Vorrichtung eine Kraftreduzierungseinrichtung auf, welche bewirkt, dass die in wenigstens einem bestimmten Punkt des Bereichs zwischen der Führungskurve und dem Führungselement wirkende Kraft zumindest im Mittel reduziert ist.

Bei der Behandlungseinheit, welche die Behältnisse behandelt, kann es sich um eine Einheit handeln, welche die Behältnisse expandiert, welche sie abfüllt, welche sie reinigt, welche sie transportiert oder dergleichen. Zum Zwecke dieser Behandlung wird diese Behandlungseinheit entlang des erwähnten Bewegungspfads geführt. Unter einer Bewegung der Behandlungseinheit in einer senkrecht zu dem Bewegungspfad stehenden Richtung wird verstanden, dass eine derartige Bewegung jedenfalls auch eine Bewegungskomponente in der senkrecht zu dem Bewegungspfad stehenden Richtung aufweist. Daher kann es sich bei dieser Bewegung auch um eine schräg bezüglich des Bewegungspfades nach oben oder nach unten oder dergleichen verlaufende Richtung handeln. Die Bewegung der Behandlungseinheit wird hierbei durch den Kontakt zwischen dem Führungselement, beispielsweise einer Führungsrolle, und der Führungskurve bewirkt, wie auch im Stand der Technik bekannt.

Bevorzugt weist die Vorrichtung eine Halteeinrichtung zum Halten der Behältnisse auf, wobei vorteilhaft eine Bewegung dieser Halteeinrichtung entlang des Bewegungspfads an die Bewegung der Behandlungseinheit gekoppelt ist.

Bei der Kraftreduzierungseinrichtung kann es sich sowohl um ein mechanisches Element handeln, welches die betreffende Kraft reduziert, als auch um eine Steuerungseinrichtung, welche diese Kraftreduzierung bewirkt. Im Folgenden werden diverse Möglichkeiten beschrieben, um eine derartige Kraftreduzierung zu erreichen. So ist es beispielsweise möglich, dass eine konkret entstehende Kraft zwischen dem Führungselement und der Führungskurve an einer bestimmten Position reduziert wird.
Auch wäre eine derartige Kraftreduzierung im Mittel dadurch möglich, dass der genaue Auftreffort der Führungsrolle auf die Führungskurve verändert wird oder aber die Krafteinwirkung auf die Führungskurve statistisch oder in anderer Weise verteilt wird. In beiden Fällen wird eine Reduzierung des Verschleißes erreicht, da hierbei zu beachten ist, dass der Verschleiß einerseits durch die entsprechenden ausgeübten Kräfte verursacht wird, andererseits jedoch auch durch die Häufigkeit der insoweit auftretenden Krafteinwirkungen. Eine Verschleißminderung ist möglich, in dem wenigstens einer dieser beiden Parameter günstig, d.h. Kraftmindernd, beeinflusst wird. Bei beiden Maßnahmen wird die auftretende Krafteinwirkung auf die den genannten Punkt oder Bereich der Führungskurve zumindest im Mittel reduziert.

Bei einer vorteilhaften Ausführungsform steht das Führungselement zeitweise mit der Führungskurve in Kontakt und zeitweise steht es mit der Führungskurve außer Kontakt. Weiterhin gelangt das Führungselement in einem in dem vorgegebenen Bereich liegenden Auftreffpunkt in Kontakt mit der Führungskurve, wobei die Kraftreduzierungseinrichtung bewirkt, dass die in einem und insbesondere in diesem bestimmten Punkt des Bereichs zwischen der Führungskurve und dem Führungselement wirkende Kraft zumindest im Mittel reduziert ist.

Bei dieser Ausgestaltung schlägt beispielsweise das Führungselement auf die Führungskurve auf und es wird angestrebt, die durch dieses Auftreffen verursachten Verschleißwirkungen zu reduzieren. Es wird jedoch darauf hingewiesen, dass es nicht notwendigerweise zu einem in Kontakt treten kommen muss, sondern auch bei entsprechender Ausgestaltung der Führungskurve, beispielsweise sich stark ändernden Steigungen, entsprechende Krafteinwirkungen auftreten können, die im Mittel reduziert werden können.

Bei einer weiteren vorteilhaften Ausführungsform ist eine Projektion des Bewegungspfads in der senkrecht zu dem Bewegungspfad stehenden Richtung im Wesentlichen eine Kreislinie. Dies bedeutet, dass die Behandlungseinrichtungen in einer Projektion betrachtet, mit ihrer Bewegung eine Kreisbahn beschreiben.

Bei einer weiteren vorteilhaften Ausführungsform ist der Auftreffpunkt innerhalb des Bereichs variabel. Durch diese Veränderung des Auftreffpunktes wird im Mittel die auf einen bestimmten Punkt der Führungskurve ausgeübte Kraft reduziert bzw. über einen bestimmten Bereich verteilt. Dieser Bereich kann sich dabei in erster Linie entlang der Führungskurve erstrecken aber auch senkrecht hierzu. Bei einer bevorzugten Ausgestaltung wird dieser Auftreffpunkt statistisch verändert. So können beispielsweise die Behandlungseinheiten derart gesteuert werden, dass deren Führungselemente nicht stets im selben Punkt auf die Führungskurve auftreffen sondern an unterschiedlichen Punkten, welche beispielsweise - etwa durch Verwendung eines Zufallsgenerators - statistisch verteilt werden. Auch wäre es möglich, dass eine Veränderung des Auftreffpunktes im Laufe der Zeit kontinuierlich bzw. linear vorgenommen wird. Auf diese Weise wird zwar nicht notwendigerweise ein konkreter Kraftübertrag zwischen dem Führungselement und der Führungsrolle reduziert wohl aber wird im Mittel erreicht, dass die Führungskurve in ihrer Gesamtheit bzw. der erwähnte Bereich geringeren Belastungen ausgesetzt ist und daher erst später ausgewechselt werden muss.

Bei einer weiteren vorteilhaften Ausführungsform ist das Führungselement eine Führungsrolle. Diese Führungsrolle ist dabei an der Behandlungseinheit angeordnet. Bevorzugt weist die Vorrichtung eine Vielzahl von Behandlungseinheiten auf, und jede dieser Behandlungseinheiten weist ein entsprechendes Führungselement bzw. eine Führungsrolle auf.

Bei einer weiteren vorteilhaften Ausführungsform sind die Führungselemente mehrerer Behandlungseinheiten in einer senkrecht zu dem Bewegungspfad stehenden Richtung wenigstens teilweise bezüglich einander versetzt. So wäre es beispielsweise möglich, dass die Führungselemente in einer kreisförmigen Führungsbahn in radialer Richtung zueinander in radialer Richtung in Bezug auf die Führungsbahn versetzt sind. Auch auf diese Weise kann im Mittel die Krafteinwirkung auf einen bestimmten Ort der Führungskurve reduziert werden.

Bei einer weiteren vorteilhaften Ausführungsform weist die Vorrichtung einen neben der Führungskurve angeordneten Kontaktkörper auf, den das Führungselement zeitlich vor der Führungskurve kontaktiert. Auf diese Weise wird der Kraftübertrag von dem Führungselement auf die Führungskurve reduziert. Bei diesem Kontaktkörper kann es sich beispielsweise um ein leicht austauschbares Element handeln, welches lediglich zur Kraftreduzierung der Rolle auf die Führungskurve dient. Einerseits ist es dadurch möglich, die senkrecht auf die Führungskurve wirkenden Kräfte zu reduzieren. Weiterhin kann dieser Kontaktkörper auch dazu dienen, um das Führungselement zu beschleunigen, so dass es bereits mit einer korrekten Drehzahl auf die Führungskurve auftrifft und auf diese Weise können die Kräfte reduziert werden. Dabei wäre es jedoch auch möglich, dass ein entsprechender Kontaktkörper an der Behandlungseinheit angeordnet ist und zunächst dieser Kontaktkörper mit der Führungskurve in Kontakt tritt.

Bei einer weiteren vorteilhaften Ausführungsform ist der Kontaktkörper federnd gelagert. Über diese federnde Lagerung können die auftretenden Kräfte abgefangen bzw. abgedämpft werden. Weiterhin weist ein vorteilhafter Kontaktkörper auch eine auswechselbare Kontaktfläche, beispielsweise aus einem gummiartigen Material, auf.

Bei einer weiteren vorteilhaften Ausführungsform weist das Führungselement eine Kontaktfläche, beispielsweise aus einem gummiartigen Material, auf.

Bei einer weiteren vorteilhaften Ausführungsform weist wenigstens ein Führungselement oder der Kontaktkörper ein magnetisches Element auf. Dieses magnetische Element kann dabei dazu dienen, um das Führungselement bereits frühzeitig an die Führungskurve heranzuziehen. Auch kann dieses magnetische Element dazu dienen, um das Führungselement, wie eine Führungsrolle, bereits in ihrer Drehrichtung zu beschleunigen, bevor sie auf die Führungskurve auftrifft. Dabei ist es möglich, dass das magnetische Element eine Vielzahl von Magneten mit wechselnder Orientierung aufweist, die in der Art eines berührungslosen Zahnrades mit dem Führungselement bzw. dem jeweils anderen Element zusammenwirken, um dieses in Drehrichtung zu beschleunigen. Das magnetische Element kann weiterhin dazu dienen, um das Führungselement durch eine relativ schwache Magnetkraft sanft auf den Kontaktkörper oder Führungskurve aufzusetzen, bevor die eigentliche Kraft, wie beispielsweise durch einen Pneumatikzylinder hervorgerufen, zu wirken beginnt.

Bevorzugt ist die Vorrichtung aus einer Gruppe ausgewählt, welche Umformungseinrichtungen für Kunststoffbehältnisse, Fülleinrichtungen für Behältnisse, Spüleinrichtungen für Behältnisse, Verschließeinrichtungen für Behältnisse, Etikettiervorrichtungen, Packeinrichtungen oder Palettiervorrichtungen aufweist. Im Falle einer Umformungseinheit für Kunststoffbehältnisse kann es sich bei der Führungskurve beispielsweise um eine Reckkurve zur Betätigung einer Reckstange, um eine Blasdüsenkurve zur Betätigung der Blasdüsenbewegung, um eine Führungskurve für einen Orientierungsstern und dergleichen handeln.

Weiterhin kann es sich bei der Führungskurve auch um eine Transportsternkurve, eine Hubkurve für Heizdorne in einem Ofen, eine Verriegelungskurve für einen Formträger, eine Ansteuerkurve für die Öffnungsbewegung eines Formträgers, eine Hubkurve für einen Blasformboden oder auch eine Hubkurve für einen Rinser für die Vorformlinge handeln. Falls es sich bei der genannten Vorrichtung um eine Fülleinrichtung für Behältnisse handelt, kann es sich bei der Führungskurve beispielsweise um eine Ventilschaltkurve oder auch um eine Glockenhebelkurve handeln. Falls die Vorrichtung bei einer Spüleinrichtung für Behältnisse bzw. Rinsern zum Einsatz kommt kann es sich bei der Führungskurve um eine Steuerkurve handeln. Im Fall einer Verschließeinrichtung für Behältnisse kann es sich um eine Verschließhubkurve handeln.

Im Falle einer Etikettiermaschine könnte es sich bei der Führungskurve um eine Hubkurve zum Steuern des Zentrierkopfes gegebenenfalls mit der Zentrierglocke handeln und, falls es sich bei der Vorrichtung um einen Packer oder Palettierer handelt, beispielsweise um eine entsprechende Einschlagkurve einer Kettengliederführung.

Eine besonders geeignete Anwendung der vorliegenden Erfindung ergibt sich jedoch für den oben beschriebenen Fall einer Blasmaschine bzw. Umformungseinheit zum Umformen von Kunststoffvorformlingen in Kunststoffbehältnisse.

Die vorliegende Erfindung ist weiterhin auf ein Verfahren zum Behandeln von Behältnissen und insbesondere von Flüssigkeitsbehältnissen gerichtet, wobei die Behältnisse mit wenigstens einer Behandlungseinheit in einer vorbestimmten Weise behandelt werden und die Behandlungseinheit entlang eines vorgegebenem Bewegungspfads bewegt wird und wobei eine Führungskurve der Vorrichtung wenigstens einmal entlang des Bewegungspfads eine Bewegung der Behandlungseinheit in einer senkrecht zu dem Bewegungspfad stehenden Richtung bewirkt.

Dabei steht ein Führungselement der Behandlungseinheit mit der Führungskurve wenigstens zeitweise in Kontakt und eine zwischen dem Führungselement und der Führungskurve wirkende Kraft wird wenigstens zeitweise entlang eines vorgegebenen Bereichs des Bewegungspfads variiert. Erfindungsgemäß wird die in einem bestimmten Punkt des Bereichs zwischen der Führungskurve und dem Führungselement wirkende Kraft zumindest im Mittel reduziert. Damit wird auch verfahrensseitig vorgeschlagen, die auf die Führungskurve wirkenden Kräfte zumindest im Mittel zu reduzieren, was wiederum über eine Verteilung der Auftreffpunkte oder auch über eine Reduzierung der jeweils konkret wirkenden Kräfte möglich ist.

Bei einem bevorzugten Verfahren steht das Führungselement zeitweise mit der Führungskurve in Kontakt und zeitweise mit dieser außer Kontakt, wobei das Führungselement in einem in dem vorgegebenen Bereich liegenden Auftreffpunkt in Kontakt mit der Führungskurve gelangt und wobei eine in einem bestimmten Punkt des Bereichs und insbesondere diesem Auftreffpunkt zwischen der Führungskurve und dem Führungselement wirkende Kraft zumindest im Mittel reduziert.

Vorzugsweise wird wie oben erwähnt der Auftreffpunkt variiert, wobei diese Variierung insbesondere statistisch oder linear erfolgen kann.

Bei einem weiteren bevorzugten Verfahren wird die zwischen der Führungskurve und dem Führungselement wirkende Kraft durch einen zusätzlichen Kontaktkörper reduziert.

Weitere Vorteile und Ausführungsformen ergeben sich aus den beigefügten Zeichnungen:

Darin zeigen:
- Fig. 1: Eine Darstellung einer Vorrichtung zum Behandeln von Behältnissen;
- Fig. 2: eine teilweise Darstellung einer erfindungsgemäßen Vorrichtung zum Behandeln von Behältnissen;
- Fig. 3: eine schematische Darstellung zur Veranschaulichung eines Verlaufs einer Führungskurve;
- Fig. 4: eine schematische Darstellung zur Veranschaulichung einer erfindungsgemäßen Lösung;
- Fig. 5: eine Schrägansicht für eine erfindungsgemäße Lösung in einer weiteren Ausführungsform.

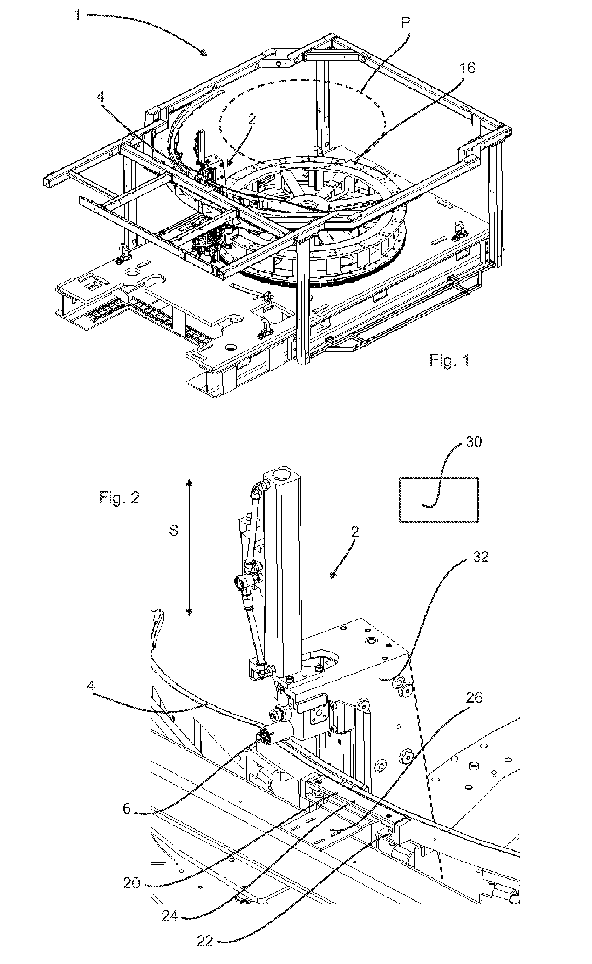

Fig. 1 zeigt eine Vorrichtung 1 zum Behandeln von (nicht gezeigten) Behältnissen. Diese Vorrichtung weist dabei ein Transportrad 16 auf, an dem eine Vielzahl von Behandlungseinheiten 2 (wobei jedoch lediglich eine Behandlungseinheit 2 dargestellt ist) angeordnet ist. Das Bezugszeichen P kennzeichnet einen Bewegungspfad entlang dessen die Behandlungseinheit 2 bewegt wird, wobei dieser Bewegungspfad P eine kreisförmige Bahn beschreibt. Daneben wird die Behandlungseinheit 2 bzw. ein Element dieser Behandlungseinheit mittels einer Führungskurve 4 auch in einer senkrecht zu diesem Bewegungspfad P stehenden Richtung bewegt.

Fig. 2 zeigt eine Teildarstellung einer erfindungsgemäßen Vorrichtung. Auch hier ist wieder die Behandlungseinheit 2 dargestellt, welche einen Träger 32 aufweist sowie ein (nicht im Detail gezeigtes) Behandlungselement, welches in der Richtung S, d. h. senkrecht zu dem in Fig. 1 dargestellten Bewegungspfad P beweglich ist. Dabei weist diese Behandlungseinheit 2 ein Führungselement, genauer eine Führungsrolle 6 auf, welche entlang einer Führungskurve 4 geführt wird. Man erkennt, dass hier diese Führungskurve 4 mehrteilig aufgebaut ist, es wäre jedoch auch möglich, dass die Führungskurve einteilig ausgebildet ist. Weiterhin muss sich die Führungskurve auch nicht notwendigerweise entlang des vollständigen Bewegungspfades erstrecken, sondern es ist möglich, dass diese nur in einigen Bereichen vorliegt.

Die Führungsrolle 6 ist bei der in Fig. 2 gezeigten Darstellung oberhalb der Führungskurve 4 und wird in einem bestimmten Bereich auf diese Führungskurve 4 aufgesetzt. In diesem Bereich kann es in Folge des dauerhaften Betriebes zu einem Abnutzen der Führungskurve 4 kommen. Um die durch dieses Aufsetzen bewirkte Krafteinwirkung zu vermindern, ist ein Kontaktkörper 20 vorgesehen, der derart gestaltet ist, dass die Führungsrolle zunächst auf den Kontaktkörper 20 bzw. dessen Kontaktfläche 24 aufsetzt und erst anschließend auf die Führungskurve.

Auf diese Weise können die Kräfte zwischen der Führungskurve 4 und dem Führungselement 6 vermindert werden. Man erkennt, dass der Kontaktkörper eine Federung 22 aufweist, mittels derer die Kontaktfläche 24 federnd gelagert ist. Das Bezugszeichen 26 bezieht sich auf einen Träger für den Kontaktkörper 20. Durch diese Federung 22 wird ein Abfedern der entstehenden Kräfte erreicht. Bei der hier dargestellten Ausführungsform sind zwei Federungen 26 vorgesehen. Es wäre jedoch auch möglich, nur eine Federung vorzusehen und etwa auf der gegenüberliegenden Seite der Kontaktfläche eine Anlenkwelle oder ein Drehlager.

Daneben kann jedoch die Vorrichtung auch eine Steuereinrichtung 30 aufweisen, welche den genauen Zeitpunkt und auch damit den genauen Ort, an dem das Führungselement 6 auf die Führungskurve 4 aufsetzt , verändert werden kann.

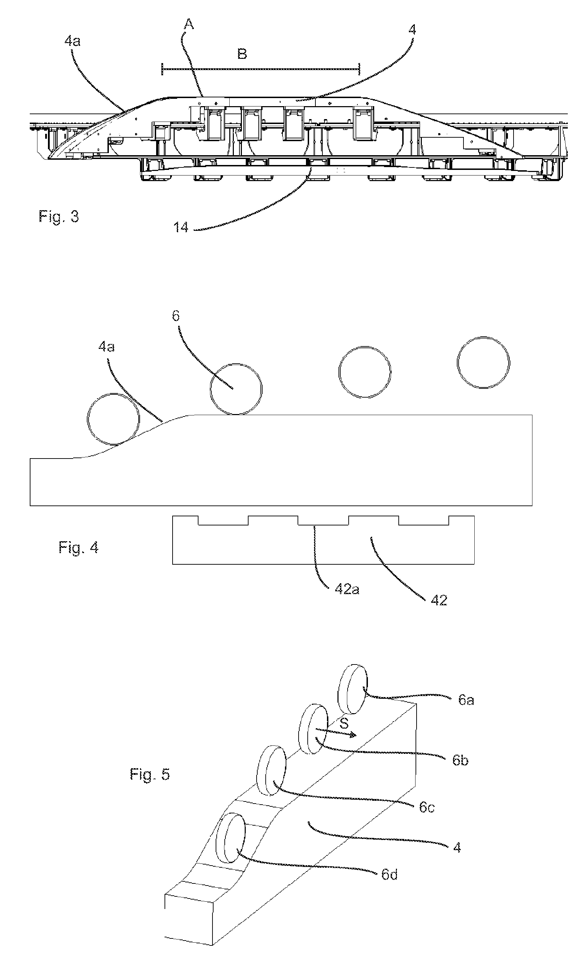

Fig. 3 zeigt eine Seitendarstellung einer erfindungsgemäßen Führungskurve. Man erkennt hier einen ansteigenden Bereich 4a und sich einen an diesen Bereich 4a anschließenden Bereich B. Innerhalb dieses Bereichs B liegt der Auftreffpunkt A, in dem das Führungselement (nicht gezeigt) auf die Führungskurve aufgesetzt wird. Im Stand der Technik setzt dabei das Führungselement stets in diesem Auftreffpunkt A an. So könnte beispielsweise bei der Anwendung im Rahmen eines Reckzylinders dieser Reckzylinder (beispielsweise per Zufallsgenerator) so angesteuert werden, dass der Verschleiß auf die gesamte Kurve bzw. den gesamten Bereich B verteilt wird. Auf diese Weise kann die Lebensdauer der Kurve erhöht werden. Dabei wäre es beispielsweise auch möglich, einen entsprechenden Reckzylinder zufällig zu entlüften und mit einem Elektromagneten die Rolle auf die Kurve zu ziehen um den Impuls des Aufschlagens zu verringern.

Fig. 4 zeigt eine weitere schematische Darstellung einer erfindungsgemäßen Vorrichtung. Auch hier ist veranschaulicht, wie die einzelnen Führungsrollen 6 auf die Führungskurve 4 bzw. dem Bereich B dieser Führungskurve 4 aufsetzen. Das Bezugszeichen 42 kennzeichnet ein magnetisches Element, wobei die einzelnen Einkerbungen 42a eine wechselnde Nord-Süd-Ausrichtung dieser Magneten darstellen. Falls die Führungsrollen 6 ebenfalls wechselnde Magneten aufweisen kann auch bereits eine Beschleunigung der Führungsrollen in deren Umfangsrichtung bzw. ein in Umdrehung versetzen der Führungsrollen erfolgen.

Daneben können in diesem Bereich Magnete eingesetzt sein, die beispielsweise einen Reckschlitten zufällig und/oder sanfter auf die Reckkurve aufsetzen lassen.

Fig. 5 zeigt eine weitere schematische Darstellung für eine erfindungsgemäße Vorrichtung.
In diesem Fall ist eine Vielzahl von Führungsrollen 6a - 6d vorgesehen, wobei diese, wie in Fig. 5 ersichtlich, in radialer Richtung zu der Führungskurve 4, d.h. senkrecht zu der Seitenfläche der Führungsrollen (vgl. Pfeil S) versetzt sind. Auch auf diese Weise wird die punktuelle Belastung, die durch die Führungsrollen 6a - 6b auf die Führungskurve 4 ausgewirkt, wird reduziert.

Daneben können die genannten Maßnahmen auch kombiniert werden, d.h. sowohl eine Versetzung der Führungsrollen 6 in der Richtung S vorgesehen sein, als auch eine der oben beschriebenen Maßnahmen und insbesondere eine Variierung des Auftreffpunktes A vorgenommen werden.

Falls es sich bei der Führungskurve 4 um eine Reckkurve für eine Blasmaschine handelt, kann diese beispielsweise aus drei Teilen bestehen nämlich einem Fangsegment, einem Landesegment und einem Recksegment. Während der Produktion mit der Maschine schlägt die oben erwähnte Führungsrolle des Reckschlittens sehr oft auf genau dieselbe Stelle des Landesegments, wodurch dieses verschleißt und ersetzt werden muss. Damit besteht auch wie oben beschrieben die Möglichkeit, den Zuschaltpunkt des Reckventils in Abhängigkeit von Betriebsstunden zu variieren beispielsweise im Neuzustand wie gehabt bei 0° zuzuschalten, bei 2000 Stunden bei 2°, bei 4000 Stunden bei 4° usw. Auf diese Weise kann die Belastung des Landesegments über einen breiteren Bereich verteilt werden und die Standzeit wesentlich erhöht werden. Eine entsprechende Schaltmodulation kann vorab festgelegt werden. Eine derartige variable Zuschaltung könnte auch bei dieser Maschine oder bei anderen Maschinen nachrüstbar sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Behandlungseinheit
- 4: Führungskurve
- 4a: Bereich
- 6: Führungselement, Führungsrolle
- 6a-6d: Führungsrolle
- 16: Transportrad
- 20: Kraftreduzierungseinrichtung
- 22: Kontaktkörper/Federung
- 24: Kontaktfläche
- 26: Träger für Kontaktkörper 20
- 30: Steuerungseinrichtung
- 32: Träger
- 42: Magnetisches Element
- 42a: Einkerbungen
- A: Auftreffpunkt
- B: Bereich
- P: Bewegungspfad
- S: Pfeil

## Patentansprüche

1. Vorrichtung (1) zum Behandeln von Behältnissen und insbesondere von Flüssigkeitsbehältnissen mit wenigstens einer Behandlungseinheit (2), welche die Behältnisse in einer vorbestimmten Weise behandelt, wobei die Behandlungseinheit (2) entlang eines vorgegebenen Bewegungspfads (P) bewegbar ist, und wobei die Vorrichtung (1) eine Führungskurve (4) aufweist, die derart gestaltet ist, dass sie wenigstens einmal entlang des Bewegungspfads eine Bewegung der Behandlungseinheit in einer senkrecht zu dem Bewegungspfad (P) stehenden Richtung bewirkt oder aufnimmt, wobei die Behandlungseinheit (2) ein mit der Führungskurve (4) wenigstens zeitweise in Kontakt stehendes Führungselement (6) aufweist und wobei eine zwischen dem Führungselement (6) und der Führungskurve wirkende Kraft wenigstens zeitweise entlang eines vorgegebenen Bereichs (B) des Bewegungspfads (P) variiert,
**dadurch gekennzeichnet, dass**
die Vorrichtung (1) eine Kraftreduzierungseinrichtung (20) aufweist, welche bewirkt, dass wenigstens die in einem bestimmten Punkt des Bereichs (B) zwischen der Führungskurve (4) und dem Führungselement (6) wirkende Kraft zumindest im Mittel reduziert ist.

2. Vorrichtung (1) nach Anspruch 1,
**dadurch gekennzeichnet, dass**
das Führungselement (6) zeitweise mit der Führungskurve in Kontakt ist und zeitweise mit der Führungskurve (6) außer Kontakt ist und das Führungselement (6) in einem in dem vorgegebenen Bereich (B) liegenden Auftreffpunkt (A) in Kontakt mit der Führungskurve (6) gelangt, wobei die Kraftreduzierungseinrichtung bewirkt, dass die in einem bestimmten Punkt des Bereichs (B) zwischen der Führungskurve (4) und dem Führungselement (6) wirkende Kraft zumindest im Mittel reduziert ist.

3. Vorrichtung (1) nach wenigstens einem der vorangegangenen Ansprüche,
**dadurch gekennzeichnet, dass**
eine Projektion des Bewegungspfads (P) in der senkrecht zu dem Bewegungspfad stehenden Richtung im Wesentlichen eine Kreislinie ist.

4. Vorrichtung (1) nach wenigstens einem der vorangegangenen Ansprüche,
**dadurch gekennzeichnet, dass**
der Auftreffpunkt (P) innerhalb des Bereichs (B) variabel ist.

5. Vorrichtung (1) nach Anspruch 4,
**dadurch gekennzeichnet, dass**
der Auftreffpunkt statistisch verändert wird.

6. Vorrichtung (1) nach wenigstens einem der vorangegangenen Ansprüche,
**dadurch gekennzeichnet, dass**
das Führungselement (6) eine Führungsrolle ist.

7. Vorrichtung (1) nach wenigstens einem der vorangegangenen Ansprüche,
**dadurch gekennzeichnet, dass**
die Vorrichtung (1) eine Vielzahl von Behandlungseinheiten (2) aufweist, wobei diese Behandlungseinheiten jeweils Führungselemente (6) aufweisen und diese Führungselemente (6) in einer senkrecht zu dem Bewegungspfad (6) stehenden Richtung wenigstens teilweise bezüglich einander versetzt sind.

8. Vorrichtung (1) nach wenigstens einem der vorangegangenen Ansprüche,
**dadurch gekennzeichnet, dass**
die Vorrichtung (1) einen neben der Führungskurve (4) angeordneten Kontaktkörper (22) aufweist, den das Führungselement (6) zeitlich vor der Führungskurve (4) kontaktiert.

9. Vorrichtung nach Anspruch 8,
**dadurch gekennzeichnet, dass**
der Kontaktkörper (22) federnd gelagert ist.

10. Vorrichtung (1) nach wenigstens einem der vorangegangenen Ansprüche,
**dadurch gekennzeichnet, dass**
wenigstens das Führungselement (6) oder der Kontaktkörper (22) ein magnetisches Element aufweist.

11. Vorrichtung (1) nach wenigstens einem der vorangegangenen Ansprüche,
**dadurch gekennzeichnet, dass**
die Vorrichtung (1) aus einer Gruppe von Vorrichtungen (1) ausgewählt ist, welche Umformungseinrichtungen für Kunststoffbehältnisse, Fülleinrichtungen für Behältnisse, Spüleinrichtungen für Behältnisse, Verschließeinrichtungen für Behältnisse, Etikettiervorrichtungen, Packeinrichtungen oder Palletiereinrichtungen aufweist.

12. Verfahren zum Behandeln von Behältnissen und insbesondere von Flüssigkeitsbehältnissen , wobei die Behältnisse mit wenigstens einer Behandlungseinheit (2) in einer vorbestimmten Weise behandelt werden und die Behandlungseinheit (2) entlang eines vorgegebenen Bewegungspfads (P) bewegt wird, und wobei eine Führungskurve (4) der Vorrichtung wenigstens einmal entlang des Bewegungspfads eine Bewegung der Behandlungseinheit in einer senkrecht zu dem Bewegungspfad (P) stehenden Richtung bewirkt und ein Führungselement der Behandlungseinheit (2) mit der Führungskurve (4) wenigstens zeitweise in Kontakt steht und eine zwischen dem Führungselement (6) und der Führungskurve wirkende Kraft wenigstens zeitweise entlang eines vorgegebenen Bereichs (B) des Bewegungspfads (P) variiert wird,
**dadurch gekennzeichnet, dass**
die in einem bestimmten Punkt des Bereichs (B) zwischen der Führungskurve (4) und dem Führungselement (6) wirkende Kraft zumindest im Mittel reduziert ist.

13. Verfahren nach Anspruch 12,
**dadurch gekennzeichnet, dass**
das Führungselement (6) zeitweise mit der Führungskurve in Kontakt ist und zeitweise mit der Führungskurve (6) außer Kontakt ist und das Führungselement (6) in einem in dem vorgegebenen Bereich (B) liegenden Auftreffpunkt (A) in Kontakt mit der Führungskurve (6) gelangt, wobei eine in einem bestimmten Punkt (A) des Bereichs (B) zwischen der Führungskurve (4) und dem Führungselement (6) wirkende Kraft zumindest im Mittel reduziert wird.

14. Verfahren nach wenigstens einem der vorangegangenen Ansprüche,
**dadurch gekennzeichnet, dass**
der Auftreffpunkt variiert wird.

15. Verfahren nach wenigstens einem der vorangegangenen Ansprüche,
**dadurch gekennzeichnet, dass**
die zwischen der Führungskurve (4) und dem Führungselement (6) wirkende Kraft durch einen Kontaktkörper reduziert wird.
